(19) Europäisches Patentamt / European Patent Office / Office européen des brevets

(11) **EP 4 730 674 A1**

(12) **EUROPEAN PATENT APPLICATION**

(43) Date of publication:
**22.04.2026 Bulletin 2026/17**

(21) Application number: **24207845.9**

(22) Date of filing: **21.10.2024**

(51) International Patent Classification (IPC):
**H04B 10/2507** $^{(2013.01)}$    **H04B 10/272** $^{(2013.01)}$
**H04B 10/61** $^{(2013.01)}$    **H04J 14/08** $^{(2006.01)}$

(52) Cooperative Patent Classification (CPC):
**H04B 10/272; H04B 10/25073; H04B 10/6161;**
**H04J 14/08;** H04B 2210/252

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Solutions and Networks Oy
02610 Espoo (FI)**

(72) Inventors:
• **LANNEER, Wouter
  2140 Antwerp (BE)**
• **VAN ROMPAEY, Robbe
  2800 Mechelen (BE)**
• **BREYNE, Laurens
  8770 Ingelmunster (BE)**

(74) Representative: **Louis Pöhlau Lohrentz
Patentanwälte
Postfach 30 55
90014 Nürnberg (DE)**

(54) **METHOD AND APPARATUS FOR INTERFERENCE CANCELLATION**

(57) The present invention discloses an apparatus, comprising means for: obtaining a received signal (x) from a plurality of Optical Network Units, ONUs (121, 122,123) connected to the OLT, wherein the received signal comprises at least a desired signal (d) originating from a first ONU (121); determining a magnitude (b) of the desired signal (d) based on the received signal; adjusting an equalizer based on the magnitude (b) of the desired signal (d); equalizing the received signal (x) using the equalizer, thereby obtaining an equalized signal (z) corresponding to an estimate of desired signal (d); providing the equalized signal (z) for further processing.

Fig. 3

**Description**

Field of the invention

Various example embodiments relate to optical networks, specifically to upstream interference cancellation in Passive Optical Network (PON).

Background

Achieving higher data rates and longer reach has always been a key focus in PON technologies. In the ITU-Q2 standardization group, the very high speed PON (G.vhsp) project has been started in order to define the next-generation Passive Optical Network (PON) technology. While the exact requirements are still being discussed, it is expected that G.vhsp will be required to provide rates of 100G, 200G, or higher. The potential limitations of intensity modulation and direct detection (IM/DD) have sparked industry interest in Coherent PON (CohPON). The high spectral efficiency enables high data rates, while the coherent reception offers improved sensitivities and the ability to fully compensate channel impairments like chromatic dispersion. CohPON thus allows for higher split ratios (more ONUs) due to the improved sensitivity over IM/DD and longer fiber reaches (far away ONUs) and the improved ability to compensate chromatic dispersion. With higher data rates IM/DD communication becomes limited to operating in the O-band due to the low chromatic dispersion, the ability to effectively compensate chromatic dispersion allows CohPON to operate in the C-band, where more optical spectrum is available.

CohPON presents unique challenges due to the coherent communication in combination with the point-to-multipoint (P2MP) network. In the upstream direction, the P2MP architecture enforces a Time Division Multiple Access (TDMA) strategy: each ONU receives a timeslot where it can transmit a burst of data to the Optical Line Terminal (OLT). Outside of this timeslot, ONUs are theoretically not allowed to transmit any data as to avoid interference. Note that some systems may uses TFDMA, where ONUs can simultaneously transmit data on different (optical) subcarriers, however, within one subcarrier TDMA is still used.

A straightforward way to generate such coherent burst is to enable and disable the transmit laser. However, when an ONU turns on the transmit laser, it takes a considerable amount of time for the wavelength to stabilize on its final nominal wavelength value. Since the coherent receiver in the OLT needs to exactly determine this wavelength to receive the signal, such wavelength drift is highly detrimental and leads to a large burst overhead and a very complicated receiver design.

Consequently, the laser is kept continuously on, even when no data is being transmitted. Instead, the optical field modulator which modulates the phase, amplitude and polarization of the light coming from the laser is used to attenuate the signal when no burst is transmitted. If no electrical signal is applied to an ideal field modulator, then all incident light from the laser is absorbed. This may be implemented by driving the field modulator towards zero transmission, that is, a zero electrical signal is applied to the field modulator. Due to non-idealities in this field modulator, the insertion loss is finite and a small amount of light leaks from the laser to the output. This leaked light can interfere with the signal from the ONU that is sending a burst.

Another solution is to use a shutter at the output of the ONU transmitter. This shutter can be used to block any optical signal from the ONU transmitter when it's not allowed to transmit. For example, this can be either an optical switch or a semiconductor optical amplifier (SOA) which gain is adjusted accordingly. This requires additional components at the ONUs which increase cost and may result in unwanted transients in the optical signal at turn on/off of the shutter. Since ONUs are more cost sensitive, this is not an ideal solution.

The adaptive equalizer, which is employed for channel equalization at the OLT, is known to act as interference canceller when interference is present in the received signal. However, the adaptive equalizer typically cannot completely cancel or suppress the interference. When attempting to suppress the interference, the adaptive equalizer often distorts the desired signal as the interfering frequencies overlap with the signal spectrum. This leads to a compromise of equalizer performance, with typically poor results in the presence of interference when the adaptive filter has a limited number of filter taps. While larger filters help to minimize the distortion, using too large filters adds prohibitive digital signal processing (DSP) computational complexity, convergence times and power consumption, which is not practical.

When strong interfering signals are present, the adaptive algorithm may erroneously identify an interferer as the desired output.

There is thus a need for an improved method and apparatus to mitigate the interference from non-transmitting ONUs.

Summary of the Invention

According to a first aspect of the invention, there is provided an apparatus comprising means for: obtaining a received signal (x) from a plurality of Optical Network Units, ONUs connected to the OLT, wherein the received signal comprises at least a desired signal (d) originating from a first ONU; determining a magnitude (b) of the desired signal (d) based on the received signal; adjusting an equalizer based on the magnitude (b) of the desired signal (d); equalizing the received signal (x) using the equalizer, thereby obtaining an equalized signal (z) corresponding to an estimate of desired signal (d); providing the equalized signal (z) for further processing.

According to a second aspect of the invention, there is provided a method comprising: obtaining a received signal (x) from a plurality of Optical Network Units, ONUs connected to the OLT, wherein the received signal comprises at least a desired signal (d) originating from a first ONU; determining a magnitude (b) of the desired signal (d) based on the received signal; adjusting an equalizer based on the magnitude (b) of the desired signal (d); equalizing the received signal (x) using the equalizer, thereby obtaining an equalized signal (z) corresponding to an estimate of desired signal (d); providing the equalized signal (z) for further processing.

According to a third aspect of the invention, there is provided a computer program comprising instructions for causing an apparatus to perform at least the following: obtaining a received signal (x) from a plurality of Optical Network Units, ONUs connected to the OLT, wherein the received signal comprises at least a desired signal (d) originating from a first ONU; determining a magnitude (b) of the desired signal (d) based on the received signal; adjusting an equalizer based on the magnitude (b) of the desired signal (d); equalizing the received signal (x) using the equalizer, thereby obtaining an equalized signal (z) corresponding to an estimate of desired signal (d); providing the equalized signal (z) for further processing.

According to a fourth aspect of the invention, there is provided an apparatus comprising at least one processor and at least one memory including computer program code, the at least one memory and the computer program code configured to with the at least one processor, cause the apparatus at least to perform: obtaining a received signal (x) from a plurality of Optical Network Units, ONUs connected to the OLT, wherein the received signal comprises at least a desired signal (d) originating from a first ONU; determining a magnitude (b) of the desired signal (d) based on the received signal; adjusting an equalizer based on the magnitude (b) of the desired signal (d); equalizing the received signal (x) using the equalizer, thereby obtaining an equalized signal (z) corresponding to an estimate of desired signal (d); providing the equalized signal (z) for further processing.

According to a fifth aspect of the invention, there is provided a non-transitory computer readable medium comprising program instructions for causing an apparatus to perform at least the following: obtaining a received signal (x) from a plurality of Optical Network Units, ONUs connected to the OLT, wherein the received signal comprises at least a desired signal (d) originating from a first ONU; determining a magnitude (b) of the desired signal (d) based on the received signal; adjusting an equalizer based on the magnitude (b) of the desired signal (d); equalizing the received signal (x) using the equalizer, thereby obtaining an equalized signal (z) corresponding to an estimate of desired signal (d); providing the equalized signal (z) for further processing.

According to a sixth aspect of the invention, there is provided a computer readable medium comprising program instructions for causing an apparatus to perform at least the following: obtaining a received signal (x) from a plurality of Optical Network Units, ONUs connected to the OLT, wherein the received signal comprises at least a desired signal (d) originating from a first ONU; determining a magnitude (b) of the desired signal (d) based on the received signal; adjusting an equalizer based on the magnitude (b) of the desired signal (d); equalizing the received signal (x) using the equalizer, thereby obtaining an equalized signal (z) corresponding to an estimate of desired signal (d); providing the equalized signal (z) for further processing

According to the example embodiments, even strong interference may be effectively removed. Interference capture can be effectively prevented. Various embodiments provide improved performance for short adaptive filters in presence of strong interference. Meanwhile, the equalizer convergence speed may be improved as well, enabling a quicker steady-state solution. Overall, this results in increased robustness of low-cost ONUs without shutter components (e.g. based on an optical switch or semiconductor optical amplifier) which may incur additional cost and transient effects during gating operation.

Brief description of the figures

For a more complete understanding of example embodiments of the present invention, reference is now made to the following descriptions taken in connection with the accompanying drawings in which:

Figure 1 shows a schematic block diagram of a network topology according to various embodiments;
Figure 2 shows a schematic diagram of an application scenario according to various embodiments;
Figure 3 shows a schematic block diagram of an apparatus 200 according to various embodiments;
Figure 4a and 4b show two example block diagrams implementing the magnitude determination;
Figure 5 shows a schematic block diagram of an example equalizer adjustment according to an embodiment;
Figure 6a shows a schematic block diagram of another example equalizer adjustment according to another embodiment;

Figure 6b shows a schematic block diagram of yet another example equalizer adjustment according to another embodiment;

Figure 7 shows a schematic block diagram of an apparatus 201 according to another embodiment;

Figure 8 shows a schematic block diagram of an apparatus 202 according to another embodiment;

Figure 9 shows a block diagram depicting the apparatus 200 operating in accordance with an example embodiment;

Figure 10 shows a flow diagram of an example method incorporating aspects of the previously disclosed embodiments.

Same or similar reference numerals refer to same or similar parts or components.

Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

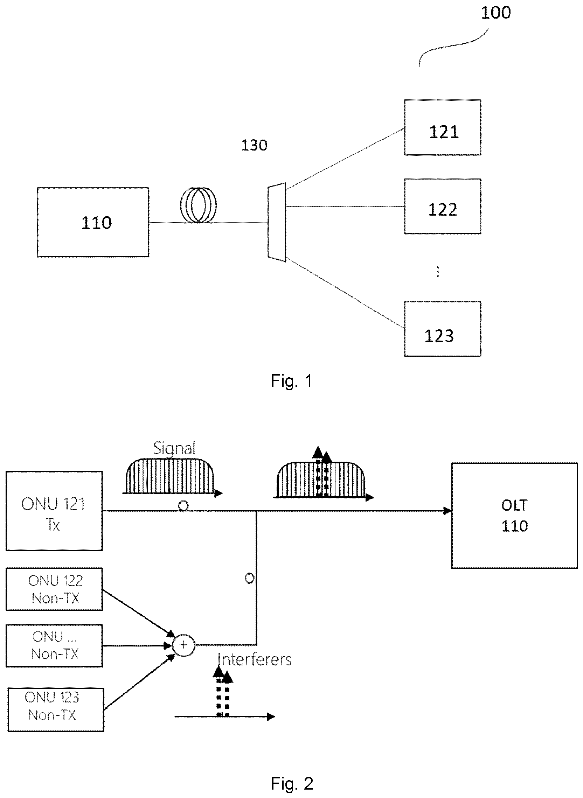

Figure 1 shows a schematic block diagram of a network topology according to various embodiments.

As shown in Fig. 1, in a PON 100, an OLT 110 at the network side is communicatively connect to a plurality of optical network units (ONUs) 121, 122, ..., 123 at the user side by means of an optical distribution network (ODN) or fiber plant 130 that contains optical fibers and splitters, but no active components. In one example, the OLT 110 may be connected to 64 ONUs. The number of ONUs is given merely as an example. In other examples, the ONU 110 may be connected to more or less ONUs.

Most PON technologies such as G-PON, E-PON, and XGS-PON are time-division multiplexing (TDM) PON technologies, in which the fiber medium is shared in time between the different ONUs. In addition, time- and wavelength-division multiplexing (TWDM) PON technologies exist, such as NG-PON2, in which multiple TDM systems at different wavelength are stacked on the same PON system. Various embodiments apply to both TDM and TWDM PON systems.

Figure 2 shows a schematic diagram of an application scenario according to various embodiments.

In the example shown in Figure 2, the ONU 121 is transmitting data. Although the spectrum of the data signal is marked with vertical strips, the spectrum of the data signal is continuous. Various modulation formats may be used to modulated the data at the transmitter of the ONU 121. In one example, QPSK may be used. The transmit symbol alphabet may correspond to all 4 distinct constellation points of the data signal. The other ONUs 122, ... 123 are not transmitting any data and are causing hence interference for example due to signal leakage in the non-ideal field modulators. The non-data modulated interference signals are narrowband and are close to the zero frequency relative to the signal wavelength. Note that certain low-frequency control tones, e.g. used for correct operation of the field modulator, may also be considered as narrowband interferers. Certain narrowband tones from the transmitter may also be considered narrowband interferes, e.g. parasitic effects like clock-feedtrough in the transmit electronics may result in narrowband tones in the optical domain. However, these tones are typically much weaker compared to the leakage due to the non-ideal field modulator. The signal originating from ONU 121 is the desired signal, overlapped with the interference signal from the non-transmitting ONUs, is transmitted over the fiber plant to the OLT 110.

In a typical implementation, it can be assumed that the optical power of an ONU that is disabled is 20 dB lower than the optical power when transmitting a signal. In worst-case conditions, the transmitting ONU is located far from the OLT whereas the interfering ONUs are located near the OLT in contrast. Most PON-standards allow a maximum differential loss of 15 dB. Hence, the signal could be attenuated 15 dB more than the interferers, resulting in interferers that are only 5 dB weaker at the OLT receiver. Furthermore, if multiple interfering ONUs are present, the total interferer power increases. With 32 or 64 ONUs, the total interfering power increases with 15 or 18 dB. This results in a worst-case total interfering power at the OLT receiver that is 10 to 13 dB stronger than the signal. In addition, the laser transmit power of the non-transmitting ONUs may be higher than the laser transmit power of the transmitting ONU, for example up to 5 dB higher due to variations in the laser itself.

With the presence of strong interference from non-transmitting ONUs, the available adaptive equalizer in the current DSP processing may erroneously capture an interference signal as the desired output. Various embodiments aim to solve the "Interferer capture" problem. The adaptive equalizer may be employed, for example, for polarization de-multiplexing, compensating linear channel impairments induced by inter-symbol interference, chromatic dispersion and/or polarization mode dispersion.

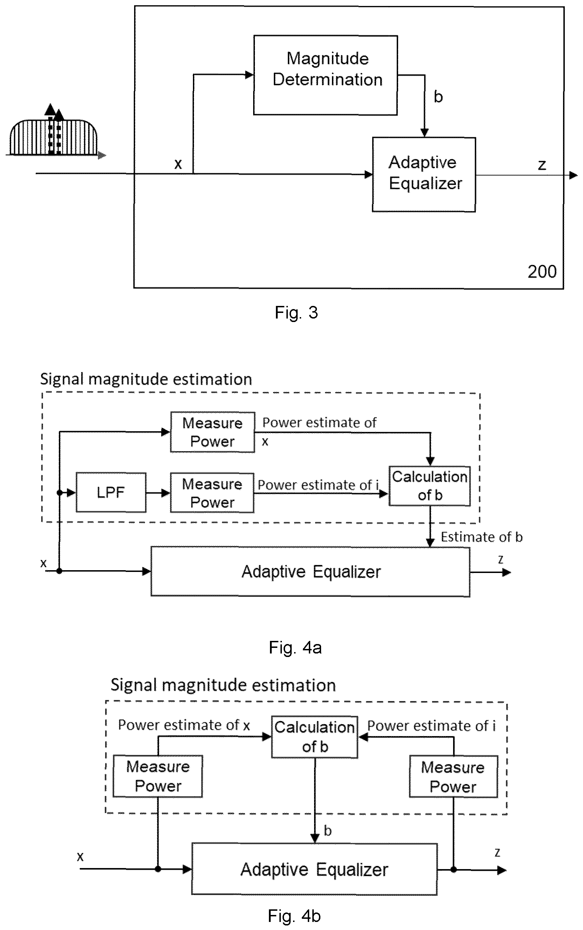

Figure 3 shows a schematic block diagram of an apparatus 200 according to various embodiments.

The apparatus 200 according to various embodiment is suitable for use by a receiver, for example a coherent receiver, in an OLT, such as OLT 110. In one example, the apparatus 200 may be implemented in the OLT 110, for example as a function block. In another example, the apparatus 200 may be implemented externally to the OLT 110 and communicatively connected to the OLT 110. The receiver may be for example a coherent receiver with single or dual polarization detection. Further, simplified coherent receivers like for example heterodyne receivers (with both single or dual polarizations) may be used. This may be combined with additional polarization coding at the ONU transmitter like for example Alamouti coding.

The apparatus 200 is configured to obtain a received signal x from a plurality of ONUs 121, 122, ... , 123 connected to the OLT 110, wherein the received signal comprises at least a desired signal d originating from a first ONU, for example 121. In the following, the ONU, from which the desired signal d is originated, may also be referred as the transmitting ONU.

In one example, the received signal may further comprise interference signals i originating from the other ONUs connected to the OLT. In the example of Figure 2, all the other ONUs 122, ..., 123 that are connected to the OLT are non-transmitting ONUs.

A skilled person should understand the received signal x here may be an electrical signal. A skilled person knows various way of processing a received optical signal to obtain the received electrical signal x. In one example, an optical frontend (not shown) in the receiver of the OLT may be configured to convert the received optical signal into a first electrical signal. The first electrical signal may be further processed to obtain the received signal x. For example, sampling, IQ imbalances compensation, timing recovery, static equalization etc. may be performed before the received signal x is provided to the apparatus 200.

In Figure 3, the received signal x can have one or two dimensions. In one example, a dual polarization coherent receiver can detect two polarizations hence x has two dimensions. While in another example, like a simplified coherent receiver that only detects one polarization, x has one dimension. Specifically, the transmitter at each ONU may modulate one or two polarizations and also the receiver may detect one or two polarizations. The received signal may also be denoted as $x_1$ if one polarization is received and $x_1$ and $x_2$ for respective polarizations if two polarizations are used, for example. Various embodiments may apply to each polarization.

The received signal x being fed to the adaptive equalizer, can be written as

$$x_p = d_p + i_p + n_p$$

where $d_p$, $i_p$, $n_p$ are respectively the desired, interfering (IF) and noise signal in $x_p$ and with the assumption $E\left\{\left|x_p\right|^2\right\} = 1$ without loss of generality, and with p = 1 if a single polarization is received, and p = {1,2} for the respective polarizations if two polarizations are received.

If the noise and IF signal contributions are small, it is reasonable to assume that $E\left\{\left|d_p\right|^2\right\} \approx 1$. The received signal power is then dominated by the desired transmitted symbol power, so the transmitted symbol alphabet can directly be used to determine a respective reference alphabet in the respective cost functions of the well-known adaptive algorithms in Table 1, employed for blind equalizer training. Specifically, for the constant modulus algorithm (CMA), the reference alphabet may correspond to a reference magnitude with value of 1. For the Multi-modus Algorithm (MMA), the reference alphabet may consist of multiple amplitudes. For each time index, one of them is selected based on decisions of the equalizer output (Decision Directed mode). For Decision-Directed (DD) or Data-Aided (DA) Least mean square (LMS) / Recursive least square (RLS), the reference alphabet may be called reference symbol alphabet, and may be considered to be same as the transmit symbol alphabet in case of small interference.

Table 1 Overview of example cost functions of different adaptive algorithms

| Algorithm name | Cost function |
|---|---|
| Constant modulus Algorithm (CMA) | $L_{CMA} = \sum_p E\left\{\left\|1 - \left\|z_p(k)\right\|^r\right\|^q\right\}$ |
| Multi-modus Algorithm (MMA) | $L_{MMA} = \sum_p E\left\{\left\|P_r\{\left\|z_p(k)\right\|\}^r - \left\|z_p(k)\right\|^r\right\|^q\right\}$ |

(continued)

| Algorithm name | Cost function |
|---|---|
| Least mean square (LMS) | $$L_{LMS} = \sum_p E\left\{\left|DD\{z_p(k)\} - z_p(k)\right|^2\right\}$$ |
| Recursive least square (RLS) | $$L_{RLS} = \sum_p \sum_k \left|DD\{z_p(k)\} - z_p(k)\right|^2$$ |

Here the output of the equalizer z is denoted as $z_p$, with p = 1 if a single polarization is received, and p = {1,2} for the respective polarizations if two polarizations are received. $P_r\{z\}$ maps z to the closest radius in the reference alphabet. This may be used for blind adaptive algorithms in combination with multi-amplitude reference alphabets. *DD{z}* maps z to the closest symbol in the reference symbol alphabet. This may be used for decision-directed adaptive algorithms.

However, in scenarios with strong IF signals, the contribution of the IF component $i_p$ can no longer be neglected and the power of the desired component will be much smaller than 1 $\left(E\left\{\left|d_p\right|^2\right\} \ll 1\right)$.

In the example shown in Figure 3, the apparatus 200 is configured to determine a magnitude b of the desired signal d based on the received signal x.

There are various ways of determining the magnitude b of the desired signal d. In one example, the apparatus 200 may be configured to determine the magnitude b of the desired signal d based on a historical information on the magnitude of the desired signal originating from the first ONU 121.

The OLT receiver knows which ONU will transmit a burst, as the signal magnitude is not expected to vary, the historical information on b from the same transmitting ONU may be reused. Specifically, the OLT may be configured to store the magnitude b0 of the desired signal originating from the ONU 121, for example, when the transmitting ONU is ONU 121 in a previous burst, as a historical information on the magnitude of the desired signal corresponding to the first ONU 121. When the ONU 121 is the transmitting ONU in a current burst, the previously stored magnitude b0 may be used as magnitude b of the desired signal originating from the first ONU 121 in the current burst.

Figure 4a and 4b show two example block diagrams implementing the magnitude determination.

In the examples shown in Figure 4a and 4b, the apparatus 200 may be configured to determine an estimate of a magnitude of the interference signals i based on the received signal x. Specifically, since the magnitude of a signal can be determined based on the power thereof, and vice versa, in the following, the signal power and the magnitude may be used interchangeably.

Specifically, the estimate of magnitude of the interference signals i may be an estimate of a total signal magnitude of a sum of the interference signals from all the non-transmitting ONUs. However, since it is only an estimate, it is not necessary to be highly precise or to account for all interference signals. In one example, it is also sufficient that the estimate captures the strongest interferers and indicates a sum signal magnitude of at least part of the interference signals. For example, if one interferer is far away from the desired signal or far away from most of the other interferers, it may be neglected.

In the example shown in Figure 4a and 4b, the apparatus 200 may be configured to determine the magnitude b of the desired signal d based on the estimate of the magnitude of the interference signals i and the magnitude of the received signal x.

Specifically, the power estimate of the desired signal d may be determined as the power estimate of the received signal x denoted by $\widehat{E\{|x|^2\}}$ minus the power estimate of the interference signals i, denoted by $\widehat{E\{|i|^2\}}$. In the example shown in Figures 4a and 4b, an estimate of b may be determined as $\hat{b} = \sqrt{E\{|d|^2\}} = \sqrt{\widehat{E\{|x|^2\}} - \widehat{E\{|i|^2\}}}$, wherein the power estimate $\widehat{E\{|x|^2\}}$ may be based on a weighted average of power levels from one or more previous time steps or taken equal to 1. Similar, $\widehat{E\{|i|^2\}}$ may be based on a weighted average of power levels from one or more previous time steps. Note that the hat-notation $\hat{}$ is used to indicate an estimate of ∎.

There are various ways of determining the magnitude of the interference signals i and the magnitude of the received signal x. In one example, the apparatus 200 may be configured to determine the estimate of the magnitude of interference signals i by performing filtering, for example low pass filtering on the received signal x.

Specifically, in the frequency domain, the desired signal is spread out over the full signal bandwidth, while the non-data modulated interference signals are narrowband and are close to the zero frequency relative to the signal wavelength, see Figure 2. In the example shown in Figure 4a, a suitable low-pass filter (LPF) is used to isolate the interference signals, and the power or magnitude of the interference signals can be measured. By also measuring the total power or magnitude of the received signal x, which may be predetermined, the signal to interferer power ratio (SIR) can be estimated. This allows continuous monitoring of the magnitude b of the desired signal d with an additional LPF filter. This filter can be implemented using a Finite Impulse Response (FIR) and/or through subsampling.

In the example shown in Figure 4b, the available equalizer, for example the adaptive equalizer, may be first configured as a LPF to obtain the interference signals i at the output of the equalizer. By measuring the power or magnitude of the total received signal x before the equalizer and the power or magnitude of interference signals i after the equalizer, the magnitude b of the desired signal d may be determined similarly as described above. After this measurement, the equalizer may be reconfigured as will be discussed below, based on obtained magnitude b of the desired signal d. This method avoids any additional filters but does not allow continuous monitoring. In practice, a single measurement can be done at the beginning of the burst, during the preamble. After that, the equalizer can lock on the desired signal and track slow changes in the signal magnitude thereafter. Here, wording of "lock on the desired signal" indicates that the output of the equalizer corresponds to an estimate of the desired signal, instead of an estimate of an interferer.

In another example, the apparatus 200 may be configured to store the estimate of the power or magnitude of the interference signals *i* as a reference interference corresponding to the first ONU.

Similarly, when a second ONU, for example ONU 122, or 123 is the transmitting ONU, the reference interference corresponding to the second ONU may be stored as well.

The apparatus 200 may be configured to determine the magnitude b of the desired signal d, originating from the first ONU, based on the reference interference corresponding to the second ONU, for example ONU 122, 123.

Comparing the two situations of the transmitting ONU being the first ONU or the second ONU, the difference in the interference signals is not significant. For example, the OLT 110 may be connected to 64 ONUs. In a first burst, the first ONU 121 may be the transmitting ONU, all the other 63 ONUs are non-transmitting ONUs and are causing interference. In a second burst, the second ONU 122 is the transmitting ONU, the first ONU 121 and the other 62 ONUs are non-transmitting ONUs. Comparing the first burst and the second burst, there are 62 non-transmitting ONUs in common. Thus, the magnitude of the interference signals in the first burst and the second burst may be considered as being the same.

Specifically, the apparatus 200 may be configured to determine the magnitude b of the desired signal d, originating from the first ONU 121, by using the reference interference corresponding to the second ONU 122 as the estimate of the power or magnitude of the interference signals when the first ONU is the transmitting ONU.

In yet another example, the apparatus 200 may be configured to equalize, for example, using the available equalizer (will be elaborated below), the received signal x based on a predetermined magnitude b' of the desired signal d, to determine whether an output of the equalizer corresponds to an estimate of the desired signal d, and to determine the predetermined magnitude b' of the desired signal d as the magnitude b of the desired signal d, upon determining the output of the equalizer corresponds to the desired signal d.

When the SIR is high, a high signal magnitude can be expected. The initial predetermined magnitude b' can be set close to one and decreased until the adaptive equalizer locks on the desired signal d. Analogously, when the SIR is low, a low signal magnitude can be expected, hence the initial predetermined magnitude b' may be set to a small value (in line with the worst expected SIR) and increased until the adaptive equalizer locks. When the adaptive equalizer locks, an additional verification should be done to verify if the equalizer locked to an interferer or to the desired signal. A skilled person should understand, the equalizer being locked to the desired signal means that the output of the equalizer corresponds to an estimate of the desired signal d.

Various methods may be used to determine whether the output of the equalizer corresponds to an estimate of the desired signal d:

In one example, it may be determined based on whether the taps of the equalizer correspond to a realistic data equalizer (e.g. not a low pass filter).

In another example, it may be determined based on an inspection of the frequency content in the output of the equalizer. A narrow spectrum indicates locking on an interfering signal.

In yet another example, it may be determined based on the variance of the magnitude of the output of the equalizer. When locking on an interferer, the output of the equalizer is a certain point rotating with fixed frequency in the complex domain, and hence the variance of the magnitude is very low compared to the variance of actual data magnitudes (as data contains different constellation points).

In yet another example, it may be determined based on an evaluation of the subsequent DSP functions. If the subsequent DSP functions operate correctly, it may indicate that the output of the equalizer corresponds to an estimate of the desired signal d. If the subsequent DSP functions cannot operate correctly, it may indicate that the output of the equalizer corresponds to an interferer.

In one example, the apparatus 200 may be configured to identify a pilot signal from the received signal x; and to determine the magnitude b of the desired signal d based on a magnitude of the pilot signal.

Specifically, by using correlation, the location of the pilot symbols and their magnitudes can be extracted. Various method may be used to determine a magnitude estimate of the pilot signal. This magnitude estimate can then be used as the magnitude b of the desired signal d. This can be done for example during the preamble, this method can only be applied when pilots are being transmitted.

In the example shown in Figure 3, the apparatus 200 is further configured to adjust an equalizer based on the magnitude b of the desired signal d, and to equalize the received signal x using the equalizer, thereby obtaining an equalized signal z corresponding to an estimate of desired signal d.

The adjusting of the equalizer based on the magnitude b of the desired signal d may be implemented in various ways.

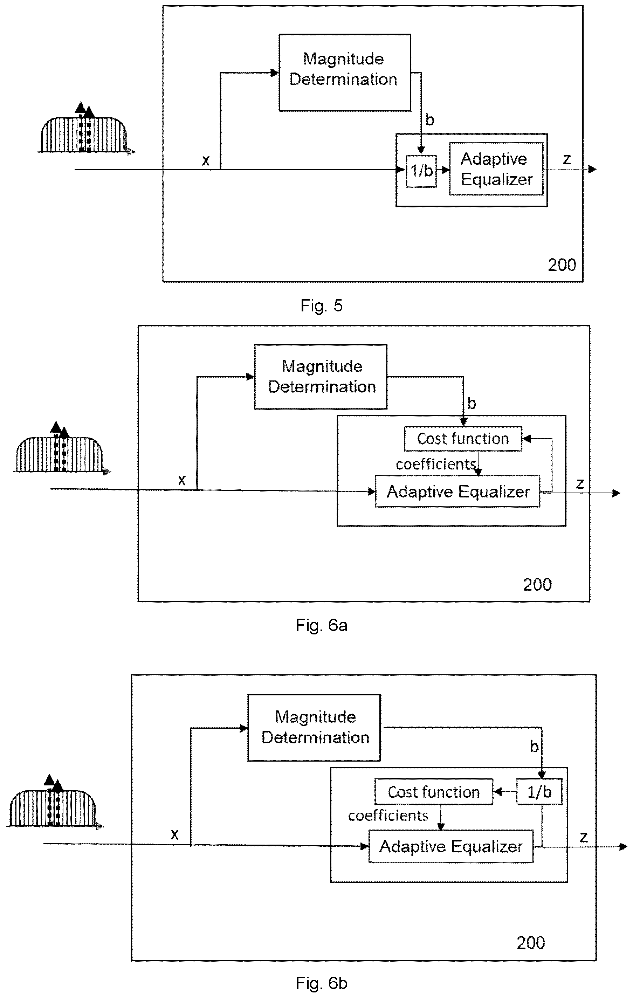

Figure 5 shows a schematic block diagram of an example equalizer adjustment according to an embodiment.

In the example shown in Figure 5, the apparatus 200 may be configured to adjust the received signal x, for example by scaling the magnitude of the received signal x, based on the magnitude b of the desired signal d, thereby adjusting an input to the equalizer.

Specifically, the received signal x may be scaled (which is equivalent to multiplying) with 1/b, obtaining an adjusted incoming signal. Thus, the desired signal component in the adjusted incoming signal may have a magnitude of 1, for which the normal cost functions are defined. Then the adjusted incoming signal may be provided to for example a state-of-the-art adaptive equalizer that takes adjusted incoming signal as input and outputs equalized signal z.

In another example, the apparatus 200 may be configured to adjust a coefficient of the equalizer based on the magnitude b of the desired signal d.

Specifically, one or more of the coefficients of the equalizer may be adjusted through adaptive training with the purpose of minimizing a cost function.

Figure 6a shows a schematic block diagram of another example equalizer adjustment according to another embodiment.

In the example shown in Figure 6a, the apparatus 200 may be configured to adjust the cost function used to train the equalizer based on the magnitude b of the desired signal d.

Generally, the cost function provides a metric that penalizes the distance between a certain reference signal and the equalized signal. The equalizer may be trained, so that the equalized signal is closest to the reference signal. In one example, a reference/equalized signal may comprise a sequence of reference alphabet /equalized symbols.

Specifically, the CMA cost function, provides a metric which penalizes the distance between a predetermined reference magnitude and the magnitude of the equalized signal. The predetermined reference magnitude may also be called reference alphabet. Specifically, the reference signal of CMA consists of a sequence of predetermined reference magnitudes. The MMA cost function extends this distance metric towards multi-amplitude alphabets. Other cost functions, for example, Decision-Directed (DD) or Data-Aided (DA) LMS and RLS provide a distance metric based on the mean squared error between the reference signal and the equalized signal. The reference signal may be derived by decision feedback.

The cost function may be adjusted in various ways. In one example, the type of cost function may be determined based on the magnitude b of the desired signal d.

In another example, the apparatus 200 may be configured to rescale the reference, for example the reference alphabet or the reference signal, in the cost function based on the magnitude b of the desired signal d. Specifically, the predetermined reference magnitude for CMA may be scaled with b. In another example, the decision feedback reference signal for DD-LMS may be scaled with b. See the adjusted cost functions of well-known adaptive algorithms in Table 2 below.

Figure 6b shows a schematic block diagram of yet another example equalizer adjustment according to another embodiment.

In the example shown in Figure 6b, the apparatus 200 may be configured to rescale an output of the equalizer in the cost function based on the magnitude b of the desired signal d. Specifically, as shown in Figure 6b, the output of the equalizer may be scaled with 1/b before calculating the cost function. Thereby, the cost function is adjusted in the sense of its input is adjusted. Although this rescaling may be performed on the output of the equalizer, it is mathematically equivalent with rescaling the received signal x with 1/b and thereby adjusting an input to the equalizer as described above.

In scenarios with strong IF signals, the power of the desired signal component will be much smaller than 1. Thus, it is beneficial for the adaptive algorithm to work with a scaled reference alphabet, where the scaling is ideally given by the average magnitude of the desired signal component d:

$$[075] \quad b_{opt,p} = \sqrt{\frac{E\{|d_p|^2\}}{E\{|x_p|^2\}}} = \sqrt{E\{|d_p|^2\}}$$

The following table gives examples of some adjusted cost functions.

Table 2 Adaptation to the cost function of different adaptive algorithms

| CMA $$L_{CMA} = \sum_p E\left\{\left|b_p^r - |z_p(k)|^r\right|^q\right\}$$ | MMA $$L_{MMA} = \sum_p E\left\{\left|P_{b_p r}\{|z_p(k)|\}^r - |z_p(k)|^r\right|^q\right\}$$ |
|---|---|
| LMS $$L_{LMS} = \sum_p E\left\{\left|DD_{b_p}\{z_p(k)\} - z_p(k)\right|^2\right\}$$ | RLS $$L_{RLS} = \sum_p \sum_k \left|DD_{b_p}\{z_p(k)\} - z_p(k)\right|^2$$ |

Here $P_{br}\{z\} = b\, P_r\{z/b\}$ maps z to the closest radius in the scaled reference alphabet with factor b, and $DD_b\{z\} = b\, DD\{z/b\}$ maps z to the closest symbol in the scaled reference symbol alphabet with a factor b.

Rescaling the reference, or the output of the equalizer in the cost function may also improve the equalizer convergence speed, enabling a quicker steady-state solution. The algorithm converges faster due to a better initial error, leading to fewer decision errors, particularly for LMS.

Reference is made back to Figure 3, the apparatus 200 is further configured to provide the equalized signal z to an output of the apparatus 200 for further processing.

The further processing may comprise timing recovery, frequency and phase recovery, and symbols estimation and decoding, etc.

Specifically, timing recovery may be configured to estimate timing errors and to correct it. Frequency and phase recovery may be configured to recover the frequency mismatch between transmitting laser and local oscillator (LO) at the receiver in OLT, and to estimate and compensate the laser phase noise. Symbols estimation and decoding may be configured to employ Error correction codes and to estimate transmitted symbols.

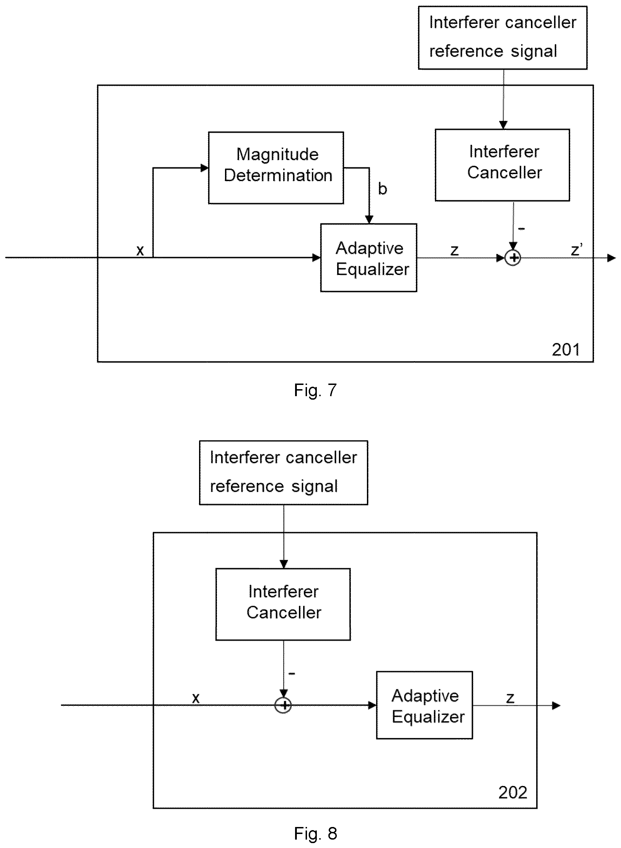

Figure 7 shows a schematic block diagram of an apparatus 201 according to another embodiment.

In the example shown in Figure 7, the apparatus 201 may be configured to predict a residual interference signal by filtering a predetermined interferer canceller reference signal using a filter.

Specifically, the interference canceller shown in Figure 7 may be an adaptive filter configured to predict the residual interference signal based on the predetermined interferer canceller reference signal.

In Figure 7, the apparatus 201 may obtain the predetermined interferer canceller reference signal from another entity outside the apparatus 201. In another example, the predetermined reference signal may be pre-configured in the apparatus 201.

In one example, the predetermined interferer canceller reference signal may be related to an output of a non-ideal zero biased field-modulator. Specifically, the predetermined interferer canceller reference signal may be represented by a constant complex signal ($u$), for example, $u = 1 + 1i$. This signal represents the output of a non-ideal zero bias laser modulator, which remains fixed over reasonable time intervals. This assumption holds true when the interference is narrowband with a small center frequency offset. A key advantage of this approach is the use of a simple 1-tap filter for both x and y polarizations, leading to fast convergence and low complexity.

In another example, the predetermined interferer canceller reference signal may be related to an output of non-transmitting ONUs modulating their lasers with a predetermined signal.

Specifically, the interference canceller may utilize an explicit interference reference signal $u_1$ if one polarization is used and ($u_1$, $u_2$) for the respective polarizations if two polarizations are used. This signal may be generated by non-transmitting ONUs modulating their lasers with an upfront known, periodic signal, such as for example a CAZAC sequence.

While this method introduces broadband interference, the fast convergence properties of CAZAC sequences potentially improve interference cancellation results. Employing a dual polarization reference signal necessitates a 2x2 MIMO structure within the interference canceller. In addition, this approach also introduces complexity due to the need for multiple filter taps to track the multi-tap interference channel and the need to bit-align the predetermined interferer canceller reference signal with the output of the adaptive equalizer.

The interference canceller may employ other standard coherent receiver DSP blocks like e.g. frame synchronization and carrier frequency offset compensation.

Alternatively, the predetermined interferer canceller reference signal ($u_1$, $u_2$) can be derived using a "decision feedback" approach. This involves subtracting the equalizer output ($z_1$, $z_2$) from the received signal ($x_1$, $x_2$) and feeding the result to the interference canceller.

Further, the apparatus 201 may be configured to adjust the equalized signal z based on the predicted residual interference signal, thereby obtaining an adjusted equalized signal z'. In the example shown in Figure 7, z' is obtained by subtracting the predicted residual interference signal from z.

The apparatus 201 may be configured to jointly train parameters used for the filter and parameters used for the equalizer, based on the adjusted equalized signal z' and the received signal x.

The adaptive equalizer and interference canceller can be jointly trained using well-established methods like CMA or LMS. Joint training is achieved by calculating the error signal after the interference cancellation stage. Various cost functions from Table 2 can be employed for this purpose.

The adaptive filter structure resembles a traditional Feed-Forward Equalizer (FFE) + Decision Feedback Equalizer (DFE), with the DFE utilizing a decision device to generate the interferer canceller reference signal.

Figure 8 shows a schematic block diagram of an apparatus 202 according to another embodiment.

This embodiment utilizes an interference canceller preceding the standard adaptive equalizer. The canceller exploits the (e.g. fixed) interferer canceller reference signal to eliminate interference from the received signal, independent of the adaptive equalizer as shown in Figure 8.

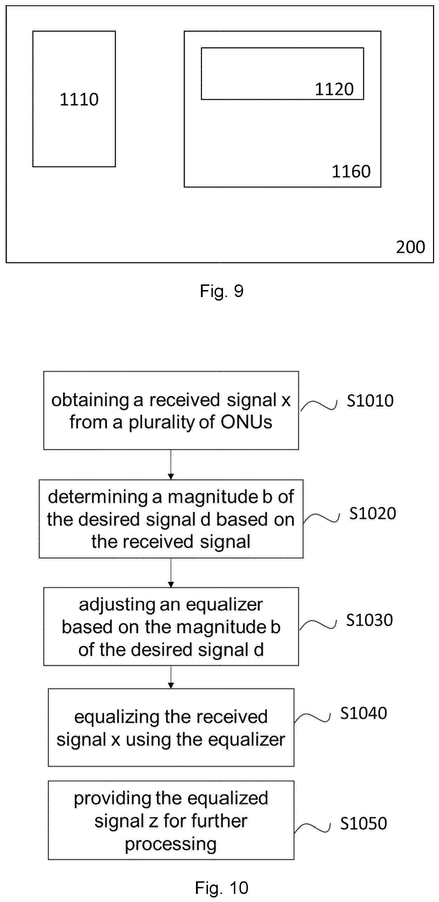

Figure 9 is a block diagram depicting the apparatus 200 operating in accordance with an example embodiment. The block diagram may apply to any of the above-described apparatus 201, 202 as well. The apparatus 200 may be, for example, an electronic device such as a chip, chip-set, an electronic device or an access network controller. The apparatus 200 includes a processor 1110 and a memory 1160. In other examples, the apparatus 200 may comprise multiple processors.

In the example of Figure 9, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus.

The memory 1160 stores computer program instructions 1120 which when loaded into the processor 1110 control the operation of the apparatus 200 as explained above. In other examples, the apparatus 200 may comprise more than one memory 1160 or different kinds of storage devices.

Computer program instructions 1120 for enabling implementations of example embodiments of the invention or a part of such computer program instructions may be loaded onto the apparatus 200 by the manufacturer of the apparatus 200, by a user of the apparatus 200, or by the apparatus 200 itself based on a download program, or the instructions can be pushed to the apparatus 200 by an external device. The computer program instructions may arrive at the apparatus 200 via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 200 comprises means, wherein the means comprises at least one processor 1110, at least one memory 1160 including computer program code 1120, the at least one memory 1160 and the computer program code 1120 configured to, with the at least one processor 1110, cause the performance of the apparatus 200.

Figure 10 illustrates a flow diagram of an example method incorporating aspects of the previously disclosed embodiments.

The method starts with step S1010, obtaining a received signal x from a plurality of ONUs 121, 122, ... , 123 connected to the OLT, wherein the received signal comprises at least a desired signal d originating from a first ONU 121.

The method proceeds with step S1020, determining a magnitude b of the desired signal (d) based on the received signal;

The method proceeds with step S1030, adjusting an equalizer based on the magnitude (b) of the desired signal (d);

The method proceeds with step S1040, equalizing the received signal x using the equalizer, thereby obtaining an equalized signal z corresponding to an estimate of desired signal (d);

The method proceeds with step S1050, providing the equalized signal z for further processing.

A skilled person shall understand that the sequence of the method is not limited to the illustrated example. The method may be implemented in other sequence.

Without in any way limiting the scope, interpretation, or application of the claims appearing below, a technical effect of one or more of the example embodiments disclosed herein is that the interference signal, even strong interference may be effectively removed. Interference capture can be effectively prevented. Various embodiments provide improved performance for short adaptive filters in presence of strong interference. Meanwhile, the equalizer convergence speed may be improved as well, enabling a quicker steady-state solution. Overall, this results in increased robustness of low-cost ONUs without shutter components (e.g. based on an optical switch or semiconductor optical amplifier) which may incur additional cost and transient effects during gating operation.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in Figure 9. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

**Claims**

1. An apparatus (200, 201) for use by a receiver in an Optical Line Terminal, OLT (110), comprising means for:

   - obtaining a received signal (x) from a plurality of Optical Network Units, ONUs (121, 122,123) connected to the OLT, wherein the received signal comprises at least a desired signal (d) originating from a first ONU (121);
   - determining a magnitude (b) of the desired signal (d) based on the received signal;
   - adjusting an equalizer based on the magnitude (b) of the desired signal (d);
   - equalizing the received signal (x) using the equalizer, thereby obtaining an equalized signal (z) corresponding to an estimate of desired signal (d);
   - providing the equalized signal (z) for further processing.

2. The apparatus (200, 201) according to claim 1, wherein the adjusting of the equalizer based on the magnitude (b) of the desired signal (d) comprises:

   - adjusting the received signal (x) based on the magnitude (b) of the desired signal (d), or
   - adjusting a coefficient of the equalizer based on the magnitude (b) of the desired signal (d).

3. The apparatus (200, 201) according to the preceding claim, wherein the adjusting of the coefficient of the equalizer based on the magnitude (b) of the desired signal (d) comprises:

   - adjusting a cost function used to train the equalizer based on the magnitude (b) of the desired signal (d).

4. The apparatus (200, 201) according to the preceding claim, wherein the adjusting of the cost function based on the magnitude (b) comprises:

   - rescaling a reference in the cost function based on the magnitude (b) of the desired signal (d); or
   - rescaling an output of the equalizer in the cost function based on the magnitude (b) of the desired signal (d).

5. The apparatus (200, 201) according to any preceding claim, wherein the received signal further comprises interference signals (i) originating from the other ONUs connected to the OLT; and the means are further configured for:

- determining an estimate of a magnitude of the interference signals (i) based on the received signal (x).

6. The apparatus (200, 201) according to the preceding claim, wherein the means are further configured for:

- determine the magnitude (b) of the desired signal (d) based on the estimate of the magnitude of the interference signals (i), and the magnitude of the received signal (x).

7. The apparatus (200, 201) according to any of claims 5-6, wherein the means are further configured for:

- determining the estimate of the magnitude of interference signals (i) by performing filtering on the received signal (x).

8. The apparatus (200, 201) according to any preceding claim, wherein the means are further configured for:

- determining the magnitude (b) of the desired signal (d) based on a historical information on the magnitude of the desired signal originating from the first ONU (121).

9. The apparatus (200, 201) according to any preceding claim, wherein the means are further configured for:

- equalizing the received signal (x) based on a predetermined magnitude (b') of the desired signal (d);
- determining whether an output of the equalizer corresponds to an estimate of the desired signal (d),
- determining the predetermined magnitude (b') of the desired signal (d) as the magnitude (b) of the desired signal (d), upon determining the output of the equalizer corresponds to the desired signal (d).

10. The apparatus (200, 201) according to any preceding claim, wherein the means are further configured for:

- identifying a pilot signal from the received signal (x);
- determining the magnitude (b) of the desired signal (d) based on a magnitude estimate of the pilot signal.

11. The apparatus (201) according to any preceding claim, wherein the means are further configured for:

- predicting a residual interference signal by filtering a predetermined interferer canceller reference signal using a filter;
- adjusting the equalized signal (z) based on the predicted residual interference signal, thereby obtaining an adjusted equalized signal (z').

12. The apparatus (201) according to the preceding claim, wherein the means are further configured for:

- jointly training parameters used for the filter and parameters used for the equalizer, based on the adjusted equalized signal (z') and the received signal (x).

13. The apparatus (201) according to any of claim 11 or 12, wherein the predetermined interferer canceller reference signal is related to:

- an output of a non-ideal zero biased field-modulator, or
- an output of non-transmitting ONUs modulating their lasers with a predetermined signal.

14. A method, comprising:

- obtaining a received signal (x) from a plurality of Optical Network Units, ONUs (121, 122,123) connected to the OLT, wherein the received signal comprises at least a desired signal (d) originating from a first ONU (121);
- determining a magnitude (b) of the desired signal (d) based on the received signal;
- adjusting an equalizer based on the magnitude (b) of the desired signal (d);
- equalizing the received signal (x) using the equalizer, thereby obtaining an equalized signal (z) corresponding to an estimate of desired signal (d);
- providing the equalized signal (z) for further processing.

15. A computer program comprising instructions for causing an apparatus to perform at least the following:

- obtaining a received signal (x) from a plurality of Optical Network Units, ONUs (121, 122,123) connected to the OLT, wherein the received signal comprises at least a desired signal (d) originating from a first ONU (121);
- determining a magnitude (b) of the desired signal (d) based on the received signal;
- adjusting an equalizer based on the magnitude (b) of the desired signal (d);
- equalizing the received signal (x) using the equalizer, thereby obtaining an equalized signal (z) corresponding to an estimate of desired signal (d);
- providing the equalized signal (z) for further processing.

100

130

110

121

122

123

Fig. 1

Signal

ONU 121
Tx

ONU 122
Non-TX

ONU ...
Non-TX

ONU 123
Non-TX

+

Interferers

OLT
110

Fig. 2

Fig. 3

Fig. 4a

Fig. 4b

Fig. 5

Fig. 6a

Fig. 6b

Fig. 7

Fig. 8

1110

1120

1160

200

Fig. 9

obtaining a received signal x from a plurality of ONUs — S1010

determining a magnitude b of the desired signal d based on the received signal — S1020

adjusting an equalizer based on the magnitude b of the desired signal d — S1030

equalizing the received signal x using the equalizer — S1040

providing the equalized signal z for further processing — S1050

Fig. 10

**EUROPEAN SEARCH REPORT**

Application Number

EP 24 20 7845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/234185 A1 (FERREIRA FILIPE [GB] ET AL) 16 August 2018 (2018-08-16) * paragraphs [0008], [0014], [0017] - [0020], [0036], [0037], [0041]; figure 3 * | 1-15 | INV. H04B10/2507 H04B10/272 H04B10/61 H04J14/08 |
| X | CN 113 141 216 B (SHANGHAI NOKIA BELL CO LTD; NOKIA SOLUTIONS & NETWORKS OY) 15 November 2022 (2022-11-15) | 1-4,8,9, 14,15 | |
| A | * paragraphs [0007], [0030], [0033], [0034], [0038], [0042], [0048], [0060]; claim 6 * | 5-7, 10-13 | |
| A | MARTIN KUIPERS ADTRAN USA GABRIELE DI ROSA ADTRAN USA: "G.sup.VHSP: Interference from non-transmitting ONUs", ITU-T DRAFT; STUDY PERIOD 2021-2024; STUDY GROUP 15, INTERNATIONAL TELECOMMUNICATION UNION, GENEVA ; CH , vol. 2/15 5 September 2023 (2023-09-05), pages 1-6, XP044364181, Retrieved from the Internet: URL:https://www-api.itu.int/ifa/t/2022/sg1 5/exchange/wp1/q2/23-09-06_Zoom/230906_D08 r1_G.Sup.VHSP_15min_Adtran_Interference%20 from%20non-transmitting%20ONUs_R1.docx [retrieved on 2023-09-05] * abstract * | 1-15 | |

TECHNICAL FIELDS SEARCHED (IPC)

H04B
H04J

The present search report has been drawn up for all claims

| Place of search | Date of completion of the search | Examiner |
|---|---|---|
| Munich | 13 March 2025 | Ganzmann, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 7845

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | | Publication date | Patent family member(s) | | Publication date |
|---|---|---|---|---|---|
| US 2018234185 | A1 | 16-08-2018 | CN | 108028718 A | 11-05-2018 |
| | | | EP | 3314791 A1 | 02-05-2018 |
| | | | GB | 2542109 A | 15-03-2017 |
| | | | US | 2018234185 A1 | 16-08-2018 |
| | | | WO | 2016207657 A1 | 29-12-2016 |
| CN 113141216 | B | 15-11-2022 | NONE | | |

For more details about this annex : see Official Journal of the European Patent Office, No. 12/82